(19) Europäisches Patentamt
European Patent Office
Office européen des brevets

(11) **EP 3 506 027 A1**

(12) **EUROPEAN PATENT APPLICATION**

(43) Date of publication:
**03.07.2019 Bulletin 2019/27**

(51) Int Cl.:
**G05B 13/02** (2006.01)

(21) Application number: **18199553.1**

(22) Date of filing: **10.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2017 JP 2017248985**

(71) Applicant: **OMRON CORPORATION
Kyoto-shi, Kyoto 600-8530 (JP)**

(72) Inventors:
• **YAMAGUCHI, Shohei
Kyoto, 600-8530 (JP)**
• **MIYAMOTO, Taichi
Kyoto, 600-8530 (JP)**

(74) Representative: **Becker Kurig Straus
Patentanwälte
Bavariastrasse 7
80336 München (DE)**

(54) **CONTROL SYSTEM, CONTROL METHOD, AND CONTROL PROGRAM**

(57)    The disclosure is to suppress degradation of control performance of PID control. A control system (1, 1A, 1B) includes a PID calculation part (12) for calculating a PID value (P, TI, Td); a PID control part (14) for executing PID control and calculating a manipulated variable (MV) for a control target (30) using the PID value (P, TI, Td), a target value of the control target (30), and an actual measurement value (PV) of the control target (30): a determination part (17) for determining whether to notify a notification part (18) by using a threshold value (Thp) of the PID value (P, TI, Td); and a setting part (51, 51B) for setting the threshold value (Thp) using a difference between a past value of the PID value (P, TI, Td) and a current value of the PID value (P, TI, Td).

FIG. 2

EP 3 506 027 A1

START

S111
Calculate the PID value

S112
Obtain a variation rate of the PID value

S113
Calculate an average value

Repeat m times

S114
Calculate a set threshold value

S115
Feedback to a determination part

END

# FIG. 3

## Description

BACKGROUND

Technical Field

The disclosure relates to control technology such as temperature control, motor control, etc. for a target device.

Description of Related Art

Conventionally, proportional-integral-derivative (PID) control as shown in Patent Document 1 has been frequently used in control equipment such as a temperature adjuster.

As shown in Patent Document 1, a PID control device includes a PID control part and a PID adjustment part. The PID adjustment part calculates a PID value (a proportional band P, an integration time TI, a differential time Td, etc.) using adaptive control or auto-tuning and provides the PID value to the PID control part.

The PID control part uses the PID value, a target value of the PID control, and a current value to determine a manipulated variable of a control target.

The manipulated variable is feedbacked to the PID adjustment part. The PID adjustment part recalculates and updates the PID value using the manipulated variable and provides the PID value to the PID control part.

Related Art

Patent Document

[Patent Document 1] Japanese Laid-Open No. 2005-284828

SUMMARY

Technical Problem

However, in conventional PID control as described in Patent Document 1, control performance of the PID control may degrade due to abnormality of a PID value, etc.

Therefore, the purpose of the disclosure is to suppress degradation of control performance of the PID control.

Solution to the Problem

A control system of the disclosure includes a PID calculation part for calculating a PID value; a PID control part for executing PID control and calculating a manipulated variable of a control target using the PID value, a target value of the control target, and an actual measurement value of the control target; a determination part for notifying a notification part of a change in the PID value if the change is equal to or greater than a threshold value; and a setting part for setting the threshold value using a difference between a past value of the PID value and a current value of the PID value.

Under this configuration, the threshold value for abnormality detection of the PID control is calculated using each value used for the PID control.

Also, in the control system of the disclosure, a variation rate calculation part for calculating a variation rate of the PID value is provided, and the threshold value is calculated using the variation rate.

Under this configuration, the threshold value can be calculated from the variation rate of the PID value, and the threshold value more appropriate for the situation is calculated.

Furthermore, the variation rate in the control system of the disclosure may be calculated from a difference between a reference value of the PID value and the current value of the PID value.

Under this configuration, the threshold value can be set according to the system using the actual measurement value of the PID value.

In addition, the control system of the disclosure may be provided with an average value calculation part for calculating an average value of variation rate, and the average value may be used to calculate the threshold value.

Under this configuration, a more stable variation rate can be calculated.

Also, the determination part in the control system of the disclosure calculates a difference between an initial value and the current value of the PID value when the PID value is used. When detecting that the difference is greater than the threshold value, the determination part notifies the notification part of the change.

Under this configuration, abnormality of the PID control is detected from an amount of change of the PID value.

Effects

According to the disclosure, degradation of control performance of the PID control can be suppressed.

BRIEF DESCRIPTION OF THE DRAWINGS

FIG. 1 is a functional block diagram of a temperature adjustment system including a temperature adjustment device according to a first embodiment of the disclosure.
FIG. 2 is a flowchart showing a method of determining whether to notify a notification part of the disclosure.
FIG. 3 is a flowchart showing a method of calculating a threshold value of the PID value of the disclosure.
FIG. 4 is a table showing a calculation result of the threshold value of the PID value of the disclosure.
FIG. 5 is a functional block diagram of a temperature adjustment system including a temperature adjustment device according to a second embodiment of the disclosure.
FIG. 6 is a functional block diagram of a temperature adjustment system including a temperature adjustment device according to a third embodiment of the disclosure.

DESCRIPTION OF THE EMBODIMENTS

Embodiments of the disclosure are described below with reference to the drawings.

•Application Embodiment

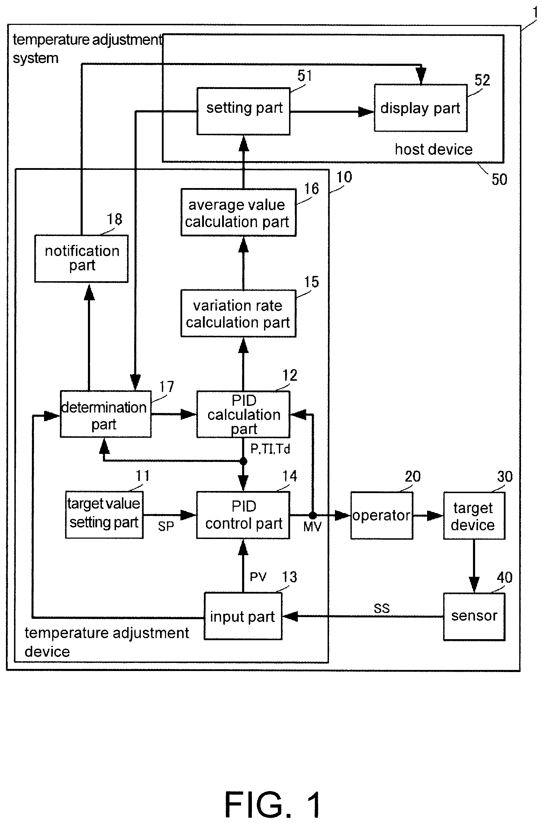

First, with reference to FIG. 1, an embodiment in which the disclosure is applied will be described. FIG. 1 is a functional block diagram of a temperature adjustment system including a temperature adjustment device according to a first embodiment of the disclosure.

As shown in FIG. 1, a temperature adjustment device 10 includes a target value setting part 11, a PID calculation part 12, an input part 13, a PID control part 14, a variation rate calculation part 15, an average value calculation part 16, a determination part 17, and a notification part 18.

Also, the temperature adjustment device 10 is a component of a temperature adjustment system 1. The temperature adjustment system 1 includes the temperature adjustment device 10, an operator 20, a target device 30, a sensor 40, and a host device 50. The host device 50 connected to the temperature adjustment device 10 includes a setting part 51 and a display part 52. The target device 30 includes, for example, a heater (not shown). Measurement data SS is inputted to the input part 13 of the temperature adjustment device 10. Therefore, in this case, the control target is a temperature of the target device 30 at a predetermined position.

The operator 20 is, for example, a solid state relay (SSR), an electromagnetic switch, or a power regulator. The operator 20 operates according to a manipulated variable MV from the temperature adjustment device 10 and controls the power of the heater of the target device 30. The sensor 40 consists of, for example, a thermocouple, etc., measures the temperature of the target device 30, and outputs the measurement data SS. The temperature adjustment system 1 corresponds to the "control system" of the disclosure.

The input part 13 calculates an actual measurement value PV from the measurement data SS. The actual measurement value PV is a value having the same unit as a target value SP to be described later. For example, if the target value SP is in degrees Celsius (°C), the actual measurement value PV is also in degrees Celsius (°C).

The input part 13 outputs the calculated actual measurement value PV to the PID control part 14 and the determination part 17.

The target value setting part 11 sets the target value SP. The target value SP is set by an operator, etc. Also, the target value setting part 11 can use the stored target value SP if including a storage means of the target value SP. The target value SP is, for example, temperature. The target value setting part 11 outputs the target value SP to the PID control part 14.

The PID calculation part 12 performs auto-tuning such as a limit cycle method and sets a PID value from temperature waveform information. The PID value includes a proportional band P, an integration time TI, and a differential time Td. Specifically, the PID calculation part 12 calculates a dead time L from a limit cycle period Tc. The PID calculation part 12 calculates the integration time TI and the differential time Td from the dead time L. Also, the PID calculation part 12 calculates the proportional band P from an amplitude of a limit cycle.

The PID calculation part 12 calculates the PID value by adaptive control using the manipulated variable MV. The PID calculation part 12 provides the calculated PID value to the PID control part 14. Also, the PID calculation part 12 outputs the proportional band P to the variation rate calculation part 15.

The PID control part 14 calculates the manipulated variable MV by executing a known PID control operation using the PID value, the target value SP, and the actual measurement value PV. The PID control part 14 outputs the manipulated variable MV to the operator 20.

Also, the PID control part 14 is constituted by a digital filter. Therefore, more specifically, the target value SP and the actual measurement value PV are inputted to the PID control part 14 by an analog/digital (A/D) conversion part (not shown), and the manipulated variable MV is outputted to the operator 20 by a digital/analog (D/A) conversion part (not shown).

The variation rate calculation part 15 calculates a variation rate using the proportional band P from the PID calculation part 12 and a reference proportional band P. The variation rate calculation part 15 outputs the calculated variation rate to the average value calculation part 16.

The average value calculation part 16 performs a product-sum operation on the variation rate calculated by the variation rate calculation part 15 and calculates an average value. The average value calculation part 16 outputs the calculated average value to the setting part 51.

The setting part 51 obtains the average value calculated by the average value calculation part 16. The setting part 51 calculates a threshold value using the average value of the variation rate. The setting part 51 outputs the threshold value of the proportional band P to the determination part 17.

The determination part 17 obtains the threshold value from the setting part 51. The determination part 17 calculates a difference between an initial value and a current value of the PID value. The determination part 17 compares the difference with the threshold value and outputs the result to the notification part 18.

The notification part 18 may display an alarm by an LED, etc., based on the result received from the determination part 17. The notification part 18 may output the result to the display part 52. Also, when the temperature adjustment system 1 is connected to a host system, the temperature adjustment system 1 may have a function of notifying the result by voltage, etc.

Under this configuration, a statistical threshold value based on the PID value calculated based on the actual measurement value can be calculated and the state of the PID control can be accurately determined. Also, when the PID control is in an abnormal state, the user is prompted to update the PID value. As a result, control degradation due to abnormality of the PID control can be suppressed.

•Configuration Embodiment 1

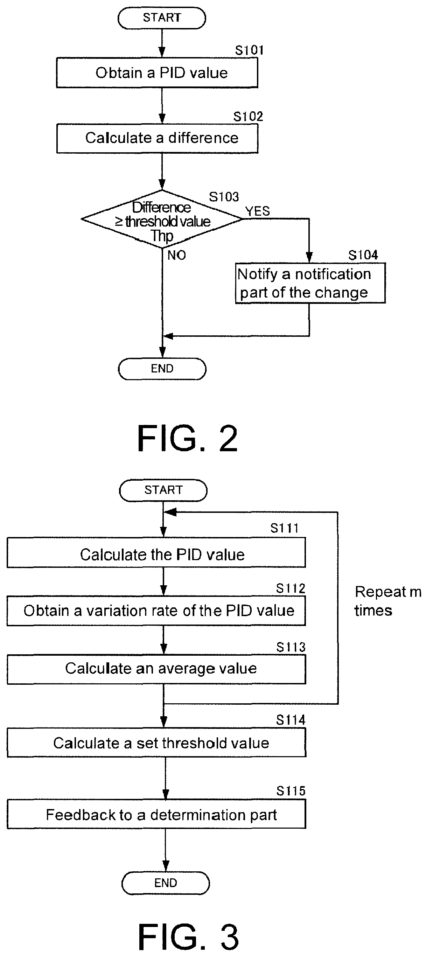

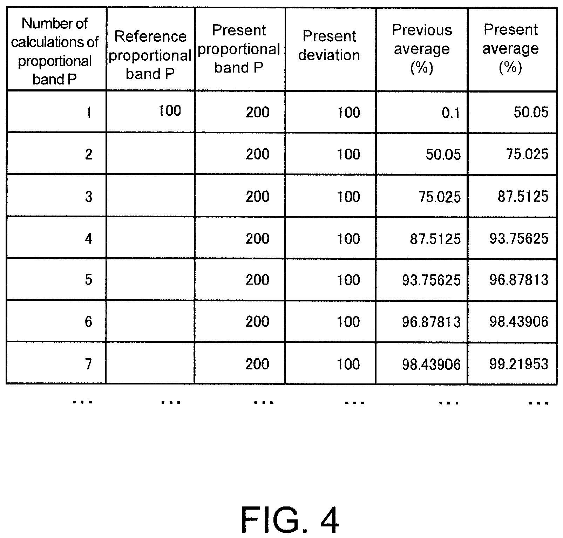

Next, a temperature adjustment system including a temperature adjustment device according to a first embodiment of the disclosure will be described with reference to the drawings. As mentioned above, FIG. 1 is a functional block diagram of a temperature adjustment system including a temperature adjustment device according to a first embodiment of the disclosure. FIG. 2 is a flowchart showing a method of determining whether to notify a notification part of the disclosure. FIG. 3 is a flowchart showing a method of calculating a threshold value of the PID value of the disclosure. FIG. 4 is a table showing a calculation result of the threshold value of the PID value of the disclosure.

As mentioned above, in the temperature adjustment system including the temperature adjustment device according to the present embodiment, the presence or absence of an update on the PID value is determined using the threshold value. A determination method is realized by, for example, the flowchart shown in FIG. 2.

As shown in FIG. 2, the determination part 17 obtains a present PID value (a proportional band P) from the PID calculation part 12 (S101). In addition, the determination part 17 obtains a threshold value for the proportional band P from the setting part 51. The method of setting the threshold value in the setting part 51 will be described later.

The determination part 17 calculates a difference between the present PID value and a reference PID value (S102). When the determination part 17 detects that the difference is equal to or greater than the threshold value Thp (S103: YES), the determination part 17 notifies the notification part 18 of a notification prompting an update on the PID value (S104).

More specifically, a method of calculating the threshold value will be described based on the flowchart of FIG. 3.

The PID calculation part 12 calculates the PID value (S111). The variation rate calculation part 15 sets a proportional band P as a preset reference, compares it with the present proportional band P, and calculates the variation rate (S112).

The average value calculation part 16 calculates an average value by performing a product-sum operation on the present variation rate obtained from the variation calculation part 15 and the variation rate calculated up to the previous time (S113). Also, when obtaining the average value for the first time, the variation rate obtained in Step S113 is set as the average value. Furthermore, Step S111, Step S112, and Step S113 may be repeatedly calculated multiple times (m times).

The setting part 51 calculates the threshold value based on the average value (variation average deviation) obtained from the average value calculation part 16 (S114). As such, the user may update the threshold value by adding an arbitrary value.

The setting part 51 feedbacks the threshold value to the determination part 17 (S115).

As a result, the determination part 17 can set the threshold value according to the actual environment based on the threshold value calculated based on a statistical result.

The display part 52 displays the threshold value set in the setting part 51.

In FIG. 4, the calculation result of the variation rate in Step S112 of FIG. 3 is shown using more concrete numerical values.

A variation average deviation Scad[n] is calculated using the following equation, wherein n is the number of calculations of the proportional band P executed, Pbfs is the reference proportional band P, and Pbf[n] is the current proportional band P.

When the number n of calculations of the proportional band P executed is set to the present time and a number "n-1"of calculations of the proportional band P executed at the preceding time is set to the previous time. The variation average deviation Scad[n] between the n-th time and the (n-1)-th time is calculated using the following equation.

Also, in the equation, the user may set weighting coefficients $\alpha$ and $\beta$ for the n-th time and the (n-1)-th time respectively. By setting the weighting coefficients $\alpha$ and $\beta$, it is possible to select whether to emphasize the previous variation value or to emphasize the current variation value.

$$Scad[n] = \left\{ \alpha \left( \frac{|Pbfs - Pbf[n]|}{Pbfs} \times 100 \right) + \beta (Scad[n-1]) \right\} / 2$$

[Equation 1]

Also, when the variation average deviation Scad[n-1] of the (n-1)-th time is 0, the following equation is used for calculation.

$$Scad[n] = \frac{|Pbfs - Pbf[n]|}{Pbfs} \times 100$$

[Equation 2]

As an example, "100" is substituted for the reference proportional band P Pbfs and "200" is substituted for Pbf[n] in the above equation. As a result, the present deviation is 100. Also, the following calculation results are calculated without setting the weighting coefficients $\alpha$ and $\beta$.

First, when n = 1, Scad[1] = 50.05 is obtained by substituting the previous average of 0.1 and the above values into Equation 1, and calculating the present average.

Next, Scad[2] is calculated. Scad[2] = 75.025 is obtained by substituting the value of Scad[1] of the previous time (n = 1) into the previous average of Scad[2].

On the premise that the deviation changes stepwise, the value of n is incremented by 1 at a time. When the value of n is 7, Scad[7] = 99.21953 and a relative deviation is 1% or less.

From such, when the number n of calculations of the proportional band P executed is equal to or greater than 7, a variation of the relative deviation of Scad[n] decreases. As such, the threshold value is calculated using the value of Scad[7].

In addition, the user updates the threshold value by adding an arbitrary value X (%) to the variation average deviation Scad[7] using a ladder, etc., as the host system. For example, by substituting Scad[7] = 99.21953 and X = 3 into the equation of the threshold value (%) = Scad[7] + X, the threshold value (%) becomes "102.21953". By feedbacking this value to the determination part 17, a more detailed threshold value can be set.

Under this configuration, a statistical threshold value based on the actual measurement value can be calculated and the state of the PID control can be accurately determined.

That is, when the PID control is in the abnormal state, the user is prompted to update the PID value. As a result, control degradation due to abnormality of the PID control can be suppressed.

In the above description, an example of calculating the threshold value for the proportional band P of the PID value has been described. However, the threshold value for an integration time may also be calculated.

•Configuration Embodiment 2

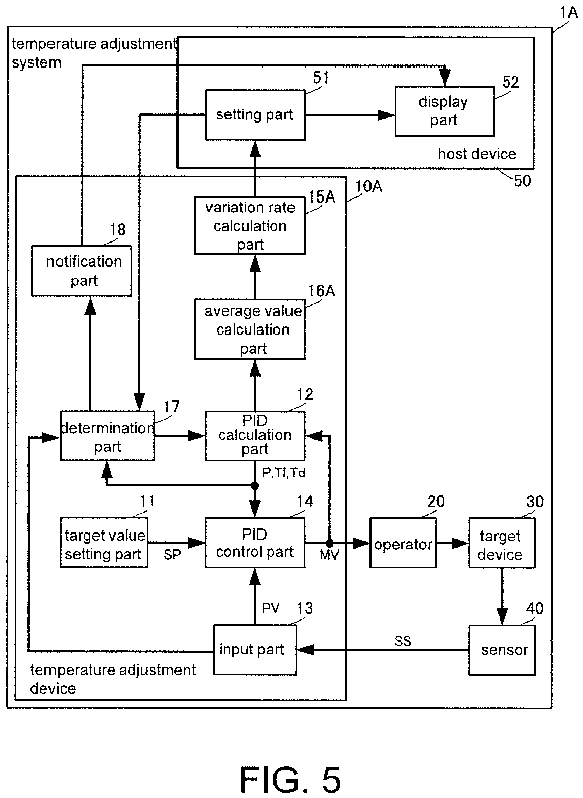

Next, a temperature adjustment system including a temperature adjustment device according to a second embodiment of the disclosure will be described with reference to the drawings. As mentioned above, FIG. 5 is a functional block diagram of a temperature adjustment system including a temperature adjustment device according to a second embodiment of the disclosure.

In the second embodiment, the order of calculations of the variation rate and the average value differs from that of the first embodiment. The second embodiment is similar to the first embodiment in other respects and descriptions of the similar parts are omitted.

As shown in FIG. 5, a temperature adjustment device 10A includes the target value setting part 11, the PID calculation part 12, the input part 13, the PID control part 14, a variation rate calculation part 15A, an average value calculation part 16A, the determination part 17, and the notification part 18.

Also, the temperature adjustment device 10A is a component of a temperature adjustment system 1A. The temperature adjustment system 1A includes the temperature adjustment device 10A, the operator 20, the target device 30, and the sensor 40. The host device 50 connected to the temperature adjustment device 10A includes the setting part 51 and the display part 52.

The average value calculation part 16A calculates an average value of the calculated proportional band P. The average value calculation part 16A outputs the calculated average value to the variation rate calculation part 15A.

The variation rate calculation part 15A calculates a variation rate using the calculated average value of the proportional band P and a reference proportional band P. The variation rate calculation part 15A outputs the calculated variation rate to the setting part 51.

The setting part 51 obtains the variation rate calculated by the variation rate calculation part 15A. The setting part 51 calculates a threshold value using the variation rate. The setting part 51 outputs the threshold value of the proportional band P to the determination part 17.

The determination part 17 obtains the threshold value from the setting part 51. The determination part 17 calculates a difference between an initial value and a current value of a PID value. When the determination part 17 detects that the difference is greater than the threshold value, the determination part 17 notifies the notification part 18 that updating the PID value is required.

Even under this configuration, a statistical threshold value based on the actual measurement value can be calculated and the state of the PID control can be accurately determined.

When the PID control is in the abnormal state, the user is prompted to update the PID value. As a result, control degradation due to abnormality of the PID control can be suppressed.

Configuration Embodiment 3

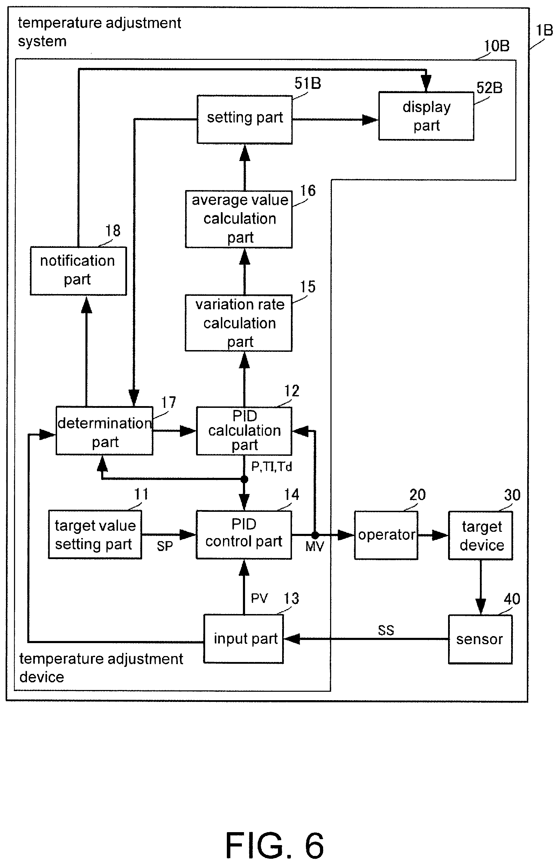

Next, a temperature adjustment system including a temperature adjustment device according to a third embodiment of the disclosure will be described with reference to the drawings. As mentioned above, FIG. 6 is a functional block diagram of a temperature adjustment system including a temperature adjustment device according to a third embodiment of the disclosure.

The third embodiment is different from the first embodiment in that a temperature adjustment device 10B includes a setting part 51B and a display part 52B. The third embodiment is similar to the first embodiment in other respects and descriptions of the similar parts are omitted.

As shown in FIG. 6, the temperature adjustment device 10B includes the target value setting part 11, the PID calculation part 12, the input part 13, the PID control part 14, the variation rate calculation part 15, the average value calculation part 16, the determination part 17, the notification part 18, and further includes the setting part 51B and the display part 52B.

The setting part 51B and the display part 52B are included in the temperature adjustment device 10B such that a seamless temperature adjustment system 1B is constructed. Also, since a device for connecting to the host device can be omitted, space can be saved.

Even under this configuration, a statistical threshold value based on the actual measurement value can be calculated and the state of the PID control can be accurately determined.

[Description of the Reference Signs]

L: time
MV: manipulated variable
n: number of calculations of the proportional band executed
Pbfs: proportional band
PV: actual measurement value
SP: target value
SS: measurement data
Tc: limit cycle period
Td: differential time

TI: integration time
1, 1A, 1B: temperature adjustment system
10, 10A, 10B: temperature adjustment device
11: target value setting part
12: PID calculation part
13: input part
14: PID control part
15, 15A: variation rate calculation part
16, 16A: average value calculation part
17: determination part
18: notification part
20: operator
30: target device
40: sensor
50: host device
51, 51B: setting part
52, 52B: display part

## Claims

1. A control system (1, 1A, 1B), **characterized by** comprising
a PID calculation part (12) for calculating a PID value (P, TI, Td);
a PID control part (14) for executing PID control and calculating a manipulated variable (MV) for a control target (30) using the PID value (P, TI, Td), a target value (SP) of the control target (30), and an actual measurement value (PV) of the control target (30);
a determination part (17) for determining whether to notify a notification part (18) by using a threshold value (Thp) of the PID value (P, TI, Td); and
a setting part (51, 51B) for setting the threshold value (Thp) using a difference between a past value of the PID value (P, TI, Td) and a current value of the PID value (P, TI, Td).

2. The control system (1, 1A, 1B) according to claim 1, comprising
a variation rate calculation part (15, 15A) for calculating a variation rate of the PID value (P, TI, Td), wherein
the threshold value (Thp) is calculated using the variation rate.

3. The control system (1, 1A, 1B) according to claim 2, wherein
the variation rate is a difference between a reference value (Pbfs) of the PID value (P, TI, Td) and the current value of the PID value (P, TI, Td).

4. The control system (1, 1A, 1B) according to claim 3, comprising
an average value calculating part (16, 16A) for calculating an average value of the variation rate, wherein
the threshold value (Thp) is calculated using the average value.

5. The control system (1, 1A, 1B) according to claim 1, wherein when the PID value (P, TI, Td) is used,
the determination part (17) calculates a difference between an initial value and the current value of the PID value (P, TI, Td) and determines whether to notify the notification part (18) upon detecting that the difference between the initial value and the current value of the PID value (P, TI, Td) is greater than the threshold value (Thp).

6. The control system (1, 1A, 1B) according to any one of claims 1 to 5, comprising
a display part (52, 52B) for displaying the threshold value (Thp) and receiving a correction of the threshold value (Thp).

7. The control system (1, 1A, 1B) according to claim 5, comprising
the notification part (18) for, when a detection result that the difference between the initial value and the current value of the PID value (P, TI, Td) is greater than the threshold value (Thp) is obtained, notifying based on the detection result.

8. A control method, **characterized by** comprising
calculating a PID value (P, TI, Td);

executing PID control and calculating a manipulated variable (MV) for a control target (30) using the PID value (P, TI, Td), a target value (SP) of the control target (30), and an actual measurement value (PV) of the control target (30); determining whether to notify a notification part (18) by using a threshold value (Thp) of the PID value (P, TI, Td); and setting the threshold value (Thp) using a difference between a past value of the PID value (P, TI, Td) and a current value of the PID value (P, TI, Td).

9. A control program, **characterized by** enabling a control device (10, 10A, 10B) to execute

a PID calculation process of calculating a PID value (P, TI, Td);

a process of executing PID control and calculating a manipulated variable (MV) for a control target (30) using the PID value (P, TI, Td), a target value (SP) of the control target (30), and an actual measurement value (PV) of the control target (30);

a process of determining whether to notify a notification part (18) by using a threshold value (Thp) of the PID value (P, TI, Td); and

a process of setting the threshold value (Thp) using a difference between a past value of the PID value (P, TI, Td) and a current value of the PID value (P, TI, Td).

FIG. 1

**FIG. 2**

**FIG. 3**

| Number of calculations of proportional band P | Reference proportional band P | Present proportional band P | Present deviation | Previous average (%) | Present average (%) |
|---|---|---|---|---|---|
| 1 | 100 | 200 | 100 | 0.1 | 50.05 |
| 2 | | 200 | 100 | 50.05 | 75.025 |
| 3 | | 200 | 100 | 75.025 | 87.5125 |
| 4 | | 200 | 100 | 87.5125 | 93.75625 |
| 5 | | 200 | 100 | 93.75625 | 96.87813 |
| 6 | | 200 | 100 | 96.87813 | 98.43906 |
| 7 | | 200 | 100 | 98.43906 | 99.21953 |
| ... | ... | ... | ... | ... | ... |

# FIG. 4

FIG. 5

FIG. 6

Europäisches
Patentamt

European
Patent Office

Office européen
des brevets

**EUROPEAN SEARCH REPORT**

Application Number

EP 18 19 9553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHN E. SEEM: "A New Pattern Recognition Adaptive Controller with Application to HVAC Systems", AUTOMATICA, vol. 34, no. 8, 1 August 1998 (1998-08-01) , pages 969-982, XP055588760, AMSTERDAM, NL ISSN: 0005-1098, DOI: 10.1016/S0005-1098(98)00033-8 * page 970 * | 1-3,5-9 | INV. G05B13/02 |
| T | IFAC Professional Brief, Hands-on PID autotuning: a guide to better utilisation XP055468155 | | |
| X | ÉRIC POULIN ET AL: "Development and evaluation of an auto-tuning and adaptive PID controller", AUTOMATICA, vol. 32, no. 1, 1 January 1996 (1996-01-01), pages 71-82, XP055588660, AMSTERDAM, NL ISSN: 0005-1098, DOI: 10.1016/0005-1098(95)00105-0 * page 71 - page 76 * | 1-9 | |

TECHNICAL FIELDS
SEARCHED (IPC)

G05B

The present search report has been drawn up for all claims

| Place of search | Date of completion of the search | Examiner |
|---|---|---|
| The Hague | 15 May 2019 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 506 027 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005284828 A